# FASCICULE DE BREVET EUROPEEN

(11) **EP 3 272 651 B1**
(45) Date de publication et mention de la délivrance du brevet: **23.03.2022**
(21) Numéro de dépôt: 17182201.8
(22) Date de dépôt: 19.07.2017
(51) Int. Cl.: B64C 25/42

(54) **ECRAN THERMIQUE DE ROUE FREINEE D'AERONEF PERFORE**
PERFORIERTES HITZESCHILD FÜR GEBREMSTES RAD EINES LUFTFAHRZEUGS
PERFORATED HEAT SHIELD FOR BRAKED WHEEL

(30) Priorité: 19.07.2016 FR 1656865
(43) Date de publication de la demande: 24.01.2018
(73) Titulaire: Safran Landing Systems, 78140 Vélizy-Villacoublay (FR)
(72) Inventeur: REMOND, Sébastien, 78140 Vélizy-Villacoublay (FR); CHOPLIN, Jeoffrey, 78140 Vélizy-Villacoublay (FR)
(74) Mandataire: Lavialle, Bruno François Stéphane

(56) Documents cités:
- EP-A1- 0 555 822
- FR-A1- 2 785 345
- FR-A1- 2 990 188
- GB-A- 2 513 331

## Description

L'invention concerne un procédé de diminution d'un temps de refroidissement de disques d'un frein de roue d'aéronef, et un écran thermique de roue d'aéronef faisant application.

### ARRIERE PLAN DE L'INVENTION

Certaines roues d'aéronefs sont associées à un frein comportant une pile de disques au moins en partie logée à l'intérieur de la roue. Il est connu des documents EP-A1-0555822 et FR-A-2990188 de disposer entre les disques et la roue un écran thermique, protégeant la roue et le pneumatique des radiations des disques chauds. En particulier, il importe d'éviter que les zones de la roue en contact avec le pneumatique n'atteignent pas une température supérieure à 200 degrés Celsius.

Cependant, de tels écrans ne permettent pas d'évacuer la chaleur accumulée dans le frein lors d'un atterrissage et du roulage de l'aéronef de la piste d'atterrissage jusqu'à l'aérogare. Or il apparaît que la température du frein est un critère majeur d'opération de l'aéronef. Par exemple, les décollages ne sont autorisés que si la température du frein est inférieure à 400 degrés. Or le refroidissement du frein prend un certain temps, pouvant empêcher le décollage rapide de l'aéronef après son arrêt à l'aérogare.

Différents moyens ont été proposés pour diminuer ce temps de refroidissement, notamment l'usage d'un ventilateur de refroidissement. Cependant, un tel équipement n'est pas choisi par toutes les compagnies aériennes.

### OBJET DE L'INVENTION

L'invention vise à proposer un procédé visant à diminuer le temps de refroidissement des disques d'un frein de roue d'aéronef, permettant d'améliorer les conditions d'opération de l'aéronef.

### RESUME DE L'INVENTION

En vue de la réalisation de ce but, on propose un procédé de diminution du temps de refroidissement de disques d'un frein d'une roue d'aéronef comprenant une jante et équipée d'un écran thermique disposé, lorsque l'on regarde dans une direction perpendiculaire à l'axe de rotation, entre une surface interne de la jante et les disques du frein logés à l'intérieur de la jante. Selon l'invention, le procédé comporte la réalisation sur l'écran thermique de perforations permettant le passage par les perforations d'air échauffé par les disques au travers de l'écran, les perforations étant pourvues d'un obstacle pour bloquer tout rayonnement direct des disques vers la roue.

Ainsi, les perforations permettent l'établissement d'un flux convectif par les perforations, facilitant l'évacuation de la chaleur produite par les disques de frein. L'air échauffé par les disques peut ainsi s'échapper plus rapidement vers l'extérieur sans avoir à contourner l'écran thermique par son extrémité la plus enfoncée à l'intérieur de la roue.

La présence d'obstacles empêche cependant que le rayonnement des disques impacte directement la roue et ne contribue à l'échauffer rapidement.

### BREVE DESCRIPTION DES DESSINS

L'invention sera mieux comprise à la lumière de la description qui suit de modes de réalisation non limitatifs de l'invention, en référence aux figures des dessins annexés, parmi lesquelles :
- La figure 1 est une vue en coupe partielle d'une roue d'aéronef équipée d'un frein et munie d'un écran thermique ;
- La figure 2 est une vue en perspective d'un pétale d'écran thermique munis de perforations selon un premier mode de réalisation de l'invention ;
- La figure 3 est une vue en coupe longitudinale du pétale d'écran thermique de la figure 2 ;
- La figure 4 est une vue similaire à celle de la figure 3 d'une variante de réalisation de l'invention ;
- La figure 5 est une vue en perspective d'un pétale d'écran thermique muni de perforations selon un deuxième mode de réalisation de l'invention ;
- La figure 6 est une vue en coupe longitudinale d'un pétale d'écran thermique selon un troisième mode de réalisation de l'invention ;
- Les figures 7A à 7C sont des vues en coupe longitudinales de pétales d'écran thermique selon diverses variantes d'un quatrième mode de réalisation de l'invention.

### DESCRIPTION DETAILLEE DE L'INVENTION

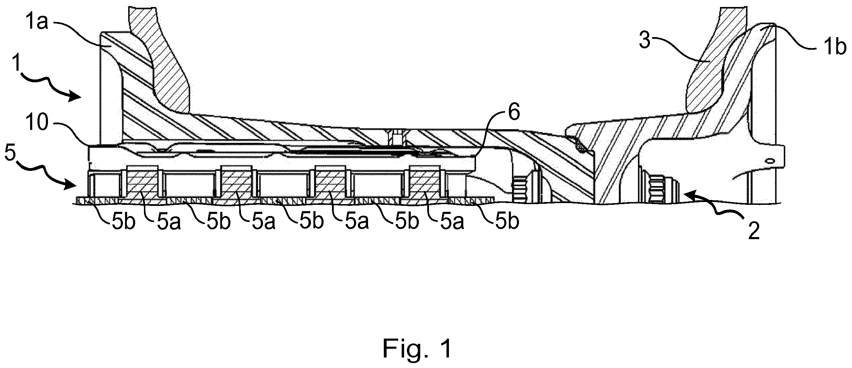

En référence à la figure 1, l'invention s'applique à une roue d'aéronef 1, ici comportant deux demi-roues 1a, 1b reliées par des boulons 2 pour porter un pneumatique 3. La roue est munie de roulements (non représentés) pour son montage à rotation sur un essieu d'un atterrisseur d'aéronef, autour d'un axe de rotation sensiblement horizontal. La demi-roue la est creuse et reçoit des disques d'un frein 5, dont des disques rotor 5a qui sont entraînées en rotation autour de l'axe de rotation de la roue par des barrettes 6 ménagées dans la demi-roue 1a, et des disques stators 5b qui sont enfilés sur un tube de reprise de couple du frein (non représenté) qui les empêche de tourner. Un écran thermique 10 composé ici de plusieurs pétales s'étendant chacun entre deux barrettes 6 est disposé entre la jante de la roue 1 et les disques 5a, 5b pour protéger la roue des radiations des disques chauds. Tout ceci est bien connu et n'est rappelé que pour situer l'invention.

Selon l'invention, on équipe l'écran thermique 10 de perforations permettant à l'air échauffé par les disques de traverser l'écran pour être évacué vers l'extérieur, tout en bloquant un rayonnement direct des disques vers la roue. Sur les figures suivantes, le flux convectif est illustré par des flèches épaisses, tandis que le rayonnement est illustré par des flèches fines.

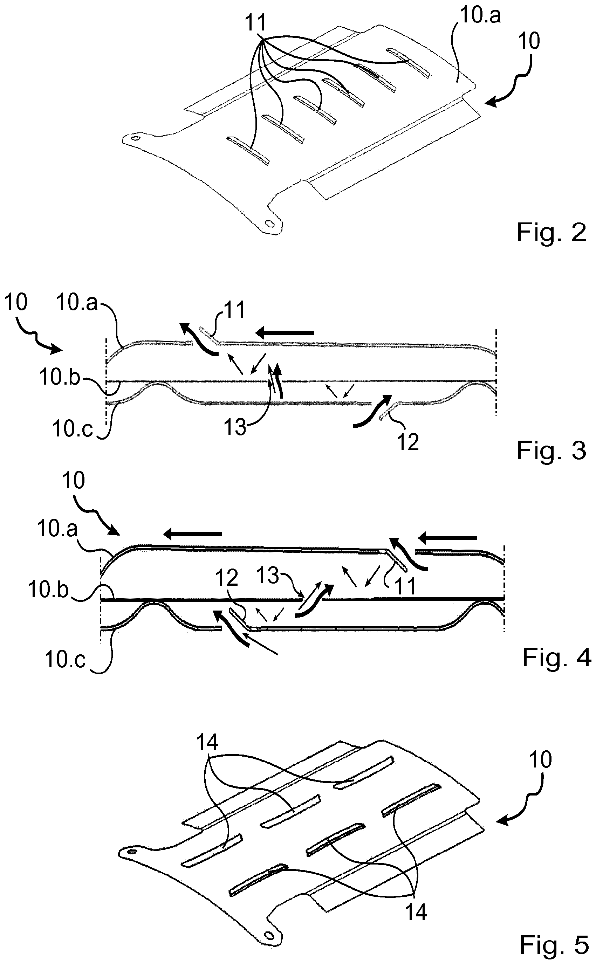

Selon un premier mode de mise en œuvre de l'invention illustré à la figure 2, chaque pétale de l'écran thermique 10 est réalisé à l'aide de trois tôles superposées 10a, 10b, 10c dont on ne voit ici que la tôle externe 10a dans laquelle des écopes 11 s'étendant selon une direction perpendiculaire à une direction axiale (la direction axiale étant celle parallèle à l'axe de rotation de la roue). On voit sur la figure 3 que les écopes 11 sur la tôle externe 10a sont associées à des écopes 12 similaires mais orientées dans l'autre sens réalisées sur la tôle interne 10c tout en étant décalées entre elles, de sorte que deux écopes associées ne soient pas à l'aplomb l'une de l'autre. Des orifices 13 sont réalisés dans la tôle intermédiaire 10b entre les écopes 11,12 pour permettre un passage de l'air au travers de l'écran. Cette perforation de l'écran thermique permet l'établissement d'un flux convectif d'air échauffé par les disques au travers de l'écran thermique, le décalage des écopes permettant à la tôle intermédiaire de former un obstacle bloquant un rayonnement direct des disques vers la roue. Un rayonnement indirect ayant subi de multiples réflexions, et donc forcément atténué, peut néanmoins passer à travers la perforation.

En variante représentée à la figure 4, les écopes 11 et 12 peuvent être ouvertes vers l'intérieur de l'écran thermique, plutôt que vers l'extérieur de l'écran thermique. On pourra bien entendu panacher les deux variantes, en prévoyant par exemple sur la tôle externe des écopes ouvertes vers l'extérieur, et sur la tôle interne des écopes ouvertes vers l'intérieur.

Selon un deuxième mode de réalisation illustré à la figure 5, les écopes 14 s'étendent axialement à la fois sur la tôle externe, comme visible ici, et sur la tôle interne, tout en étant décalées. Comme auparavant, des orifices associés sont réalisés sur la tôle intermédiaire entre deux écopes pour former avec les écopes des perforations permettant un passage d'air chaud au travers de l'écran thermique, la tôle intermédiaire formant un obstacle bloquant un rayonnement direct des disques vers la roue. Un rayonnement indirect ayant subi de multiples réflexions, et donc forcément atténué, peut néanmoins passer à travers la perforation

Dans tous les cas, lors que les écopes permettent aux polluants (poussières extérieures, carbone des disques...) de pénétrer à l'intérieur de l'écran thermique, on prévoira sur l'écran thermique des orifices d'évacuation régulièrement disposés pour que lors d'un nettoyage des roues, le liquide de nettoyage puisse s'évacuer facilement en emportant les polluants, quelle que soit la position angulaire de la roue.

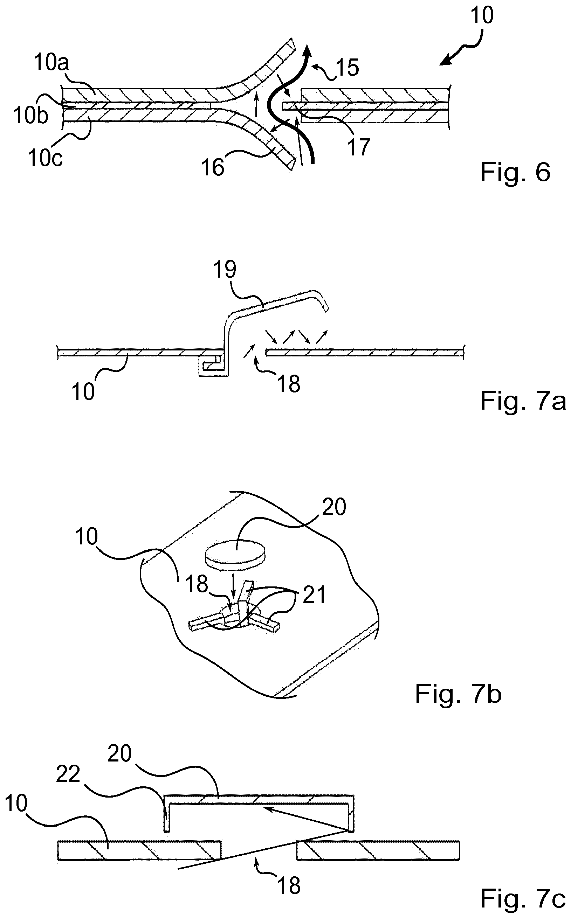

Selon un troisième mode de réalisation illustré à la figure 6, on réalise des perforations de l'écran thermique 10 à un endroit où les trois tôles 10a, 10b, 10c sont contigües. Des écopes 15,16 superposées sont réalisées dans les tôles externe 10a et interne 10c pour être ouvertes du même côté, tandis que la tôle intermédiaire 10b est percée entre les écopes 15,16, en laissant subsister une portion 17 de la tôle intermédiaire qui s'étend en regard des ouvertures des écopes 15,16 pour former un obstacle bloquant tout rayonnement direct des disques vers la roue. Un rayonnement indirect ayant subi de multiples réflexions, et donc forcément atténué, peut néanmoins passer à travers la perforation.

Selon un quatrième mode de réalisation illustré aux figures 7A à 7C, on réalise sur l'écran thermique des perforations, et on équipe l'écran thermique de boucliers coiffant les perforations pour bloquer tout rayonnement direct des disques vers la roue, tout en laissant une ouverture pour le passage de l'air échauffé. Les exemples illustrés ici concernent des écrans thermiques monotôles. Mais si l'écran thermique comporte plusieurs tôles, le bouclier sera de préférence fixé sur la tôle externe.

Comme visible à la figure 7A, la tôle constituant l'écran thermique 10 comporte une perforation 18 pour permettre le passage d'air échauffé par les disques vers l'extérieur, mais la perforation est munie d'un bouclier 19 rapporté sur l'écran thermique pour saillir d'une face externe de celui-ci. Le bouclier 19, ici fixé par pliage, recouvre la perforation 18 de sorte à former un obstacle bloquant tout rayonnement direct des disques vers la roue mais laisse subsister une ouverture pour le passage de l'air. Ici, le bouclier 19 s'étend bien au-delà de la perforation pour favoriser des réflexions répétées d'un rayonnement passant par la perforation entre le bouclier 18 et la face externe de l'écran thermique, pour en atténuer l'intensité.

A la figure 7B est illustrée une variante d'un bouclier 20 qui recouvre une perforation de l'écran thermique 10 en étant rapporté sur des pattes de fixation 21 fixées sur l'écran thermique 10 au niveau de la perforation. Comme illustré à la figure 7C, le bouclier 20 comporte avantageusement un bord tombé 22 périphérique permettant de limiter le passage du rayonnement vers la roue.

L'invention n'est pas limitée à ce qui vient d'être décrit, mais englobe au contraire toute variante entrant dans le cadre défini par les revendications.

## Revendications

1. Procédé de diminution du temps de refroidissement de disques (5a, 5b) d'un frein (5) d'une roue (1) d'aéronef comprenant une jante (1a, 1b) montée pour tourner sur un atterrisseur d'aéronef selon un axe de rotation de la roue et équipée d'un écran thermique (10) disposé, lorsque l'on regarde dans une direction perpendiculaire à l'axe de rotation, entre une surface interne de la jante et les disques de frein logés à l'intérieur de la jante, le procédé comportant la réalisation de perforations (11,12,13; 15,16,17;18) au travers de l'écran thermique pour permettre un passage au travers de l'écran thermique d'air échauffé par les disques vers la roue, les perforations étant pourvues d'un obstacle pour bloquer tout rayonnement direct des disques vers la roue.

2. Procédé selon la revendication 1, dans lequel l'écran thermique comporte une tôle externe (10a), une tôle intermédiaire (10b) et une tôle interne (10c), des écopes (11, 12) décalées étant ménagées dans les tôles externe et interne, tandis qu'un orifice (13) est ménagé dans la tôle intermédiaire entre les écopes, la tôle intermédiaire formant l'obstacle bloquant les rayonnements directs.

3. Procédé selon la revendication 2, dans lequel les écopes (11,12) s'étendent perpendiculairement à l'axe de rotation de la roue.

4. Procédé selon la revendication 2, dans lequel les écopes (14) s'étendent parallèlement à l'axe de rotation de la roue.

5. Procédé selon la revendication 1, l'écran thermique comporte une tôle externe (10a), une tôle intermédiaire (10b) et une tôle interne (10c), des écopes (15,16) superposées et ouvertes du même côté étant ménagées dans les tôles externe et interne à un endroit de l'écran thermique où les tôles sont contiguës, tandis que la tôle intermédiaire (10b) est percée entre les écopes (15,16) en laissant subsister une portion (17) de la tôle intermédiaire en regard des ouvertures des écopes formant l'obstacle bloquant les rayonnements directs.

6. Procédé selon la revendication 1, dans lequel la perforation est recouverte d'un bouclier (19 ;20) saillant d'une face externe de l'écran thermique, et qui forme un obstacle bloquant tout rayonnement direct des disques vers la roue, en laissant subsister une ouverture pour le passage de l'air.

7. Procédé selon la revendication 6, dans lequel le bouclier (19) est solidarisé à l'écran thermique par pliage.

8. Procédé selon la revendication 6, dans lequel le bouclier (20) est solidarisé à l'écran thermique par des pattes de fixation (21) s'étendant au niveau de la perforation recouverte par le bouclier.

9. Procédé selon la revendication 8, dans lequel le bouclier comporte un bord tombé (22) périphérique.

10. Roue (1) freinée d'aéronef comprenant une jante (1a,1b) destinée à être montée sur un atterrisseur pour tourner selon un axe de rotation de la roue, des disques de frein logés à l'intérieur de la jante et un écran thermique s'étendant, lorsque l'on regarde dans une direction perpendiculaire à l'axe de rotation de la roue, entre une surface interne de la jante et les disques de frein, l'écran thermique comportant des perforations agencées et conformées pour la mise en œuvre du procédé selon l'une des revendications 1 à 9.

## Patentansprüche

1. Verfahren zum Verringern der Abkühlzeit von Scheiben (5a, 5b) einer Bremse (5) eines Luftfahrzeugrades (1), das eine Felge (1a, 1b) umfasst, die an einem Luftfahrzeugfahrwerk drehbar um eine Drehachse des Rades gelagert und mit einem Hitzeschild (10) ausgestattet ist, das bei Betrachtung in einer Richtung senkrecht zur Drehachse zwischen einer Innenfläche der Felge und den im Inneren der Felge untergebrachten Bremsscheiben angeordnet ist, wobei das Verfahren die Herstellung von Perforationen (11, 12, 13; 15, 16, 17; 18) durch das Hitzeschild hindurch umfasst, um einen Durchtritt von durch die Scheiben erwärmter Luft durch das Hitzeschild zum Rad zu ermöglichen, wobei die Perforationen mit einem Hindernis versehen sind, um jegliche direkte Strahlung von den Scheiben zum Rad zu blockieren.

2. Verfahren nach Anspruch 1, bei dem das Hitzeschild ein Außenblech (10a), ein Zwischenblech (10b) und ein Innenblech (10c) umfasst, wobei versetzte Schaufeln (11, 12) in dem Außen- und Innenblech ausgebildet sind, während eine Öffnung (13) in dem Zwischenblech zwischen den Schaufeln ausgebildet ist, wobei das Zwischenblech das die direkte Strahlung blockierende Hindernis bildet.

3. Verfahren nach Anspruch 2, bei dem sich die Schaufeln (11, 12) senkrecht zur Drehachse des Rades erstrecken.

4. Verfahren nach Anspruch 2, bei dem sich die Schaufeln (14) parallel zur Drehachse des Rades erstrecken.

5. Verfahren nach Anspruch 1, wobei das Hitzeschild ein Außenblech (10a), ein Zwischenblech (10b) und ein Innenblech (10c) umfasst, wobei übereinander angeordnete und zur selben Seite hin offene Schaufeln (15, 16) in dem Außen- und Innenblech an einer Stelle des Hitzeschildes ausgebildet sind, an der die Bleche aneinanderstoßen, während das Zwischenblech (10b) zwischen den Schaufeln (15, 16) durchbohrt ist und dabei ein Abschnitt (17) des Zwischenblechs gegenüber den Öffnungen der Schaufeln bestehen bleibt, der das die direkte Strahlung blockierende Hindernis bildet.

6. Verfahren nach Anspruch 1, bei dem die Perforation von einer Abschirmung (19; 20) bedeckt ist, die von einer Außenfläche des Hitzeschildes vorsteht und die ein Hindernis bildet, das jegliche direkte Strahlung von den Scheiben zum Rad blockiert, während eine Öffnung für den Durchtritt von Luft bestehen bleibt.

7. Verfahren nach Anspruch 6, bei dem die Abschirmung (19) fest mit dem Hitzeschild durch Biegung verbunden ist.

8. Verfahren nach Anspruch 6, bei dem die Abschirmung (20) fest mit dem Hitzeschild über Befestigungslaschen (21) verbunden ist, die sich im Bereich der von der Abschirmung überdeckten Perforation erstrecken.

9. Verfahren nach Anspruch 8, bei dem die Abschirmung eine periphere abfallende Kante (22) umfasst.

10. Gebremstes Luftfahrzeugrad (1), umfassend eine Felge (1a, 1b), die dazu bestimmt ist, an einem Fahrwerk drehbar um eine Drehachse des Rades montiert zu werden, wobei sich im Inneren der Felge untergebrachte Bremsscheiben und ein Hitzeschild bei Betrachtung in einer Richtung senkrecht zur Drehachse des Rades zwischen einer Innenfläche der Felge und den Bremsscheiben erstrecken, wobei das Hitzeschild Perforationen umfasst, die zum Durchführen des Verfahrens nach einem der Ansprüche 1 bis 9 angeordnet und geformt sind.

## Claims

1. A method of reducing the cooling time for disks of a brake (5a, 5b) of an aircraft wheel (1) comprising a rim (1a, 1b) mounted to rotate on aircraft landing gear about an axis of rotation of the wheel and fitted with a heat screen (10) extending, when viewing in a direction perpendicular to the axis of rotation, between an inner surface of the rim and the disks of the brake housed inside the rim, the method comprising making perforations (11, 12, 13; 15, 16, 17, 18) through the heat screen to allow air heated by the disks to pass through the heat screen towards the wheel, the perforations being provided with obstacles to block any radiation from passing directly from the disks towards the wheel.

2. A method according to claim 1, wherein the heat screen comprises an outer sheet (10a), an intermediate sheet (10b), and an inner sheet (10c), offset scoops (11, 12) being formed in the outer and inner sheets, and an orifice (13) being formed in the intermediate sheet between the scoops, the intermediate sheet forming the obstacle that blocks direct radiation.

3. A method according to claim 2, wherein the scoops (11, 12) extend perpendicularly to the axis of rotation of the wheel.

4. A method according to claim 2, wherein the scoops (14) extend parallel to the axis of rotation of the wheel.

5. A method according to claim 1, wherein the heat screen comprises an outer sheet (10a), an intermediate sheet (10b), and an inner sheet (10c), superposed scoops (15, 16) that are open towards the same side being formed in the outer and inner sheets at locations of the heat screen where the sheets are contiguous, while the intermediate sheet (10b) is pierced between the scoops (15, 16) to leave a portion (17) of the intermediate sheet facing the openings of the scoops so as to form the obstacle blocking direct radiation.

6. A method according to claim 1, wherein the perforation is covered by a shield (19; 20) projecting from an outer face of the heat screen, and forming an obstacle blocking any radiation from passing directly from the disks towards the wheel, while leaving an opening for passing air.

7. A method according to claim 6, wherein the shield (19) is secured to the heat screen by folding.

8. A method according to claim 6, wherein the shield (20) is secured to the heat screen by fastener tabs (21) extending from the perforation that is covered by the shield.

9. A method according to claim 8, wherein the shield has a peripheral dropped edge (22).

10. A braked wheel (1) of an aircraft comprising a rim (1a, 1b) intended to be mounted on aircraft landing gear to rotate on about an axis of rotation of the wheel, brake disks housed inside the rim and a heat shield extending, when viewing in a direction perpendicular to the axis of rotation of the wheel, between an inner surface of the rim and the brake disks, the heat screen including perforations arranged and shaped to perform the method according to any one of claims 1 to 9.
